## Europäisches Patentamt

## European Patent Office

## Office européen des brevets

(19)

(11) Veröffentlichungsnummer: **0 324 957**

**A1**

# (12) EUROPÄISCHE PATENTANMELDUNG

(21) Anmeldenummer: **88121216.1**

(22) Anmeldetag: **19.12.88**

(51) Int. Cl.⁴: **C10J 3/54 , C10J 3/56**

(30) Priorität: **22.12.87 AT 3384/87**
**24.12.87 AT 3428/87**

(43) Veröffentlichungstag der Anmeldung:
**26.07.89 Patentblatt 89/30**

(84) Benannte Vertragsstaaten:
**AT BE CH DE ES FR GB GR IT LI LU NL SE**

(71) Anmelder: **WAAGNER-BIRO**
**AKTIENGESELLSCHAFT**
**Stadlauer-Strasse 54 Postfach 11**
**A-1221 Wien(AT)**

(72) Erfinder: **Beckmann, Georg, Dipl.-Ing.Dr.**
**Jacquingasse 55/10**
**A-1030 Wien(AT)**
Erfinder: **Hillinger, Bruno, Dipl.-Ing.Dr.**
**Dreisteingasse 20**
**A-2371 Hinterbrühl(AT)**

(74) Vertreter: **Wallner, Gerhard, Dipl.-Ing.**
**c/o Waagner-Biro Aktiengesellschaft**
**Patentabteilung Stadlauer-Strasse 54**
**Postfach 11**
**A-1221 Wien(AT)**

(54) **Verfahren und Einrichtung zur thermischen Herstellung von Chemierohstoffen.**

(57) Durch die Anordnung einer Trocknerkette zumindest bestehend aus Vortrockner 2 und Endstufe 3 in der Zuleitung 1 eines Brenngases und der stufenweisen Druckerhöhung, insbesondere auf einen Druck knapp über dem des Reaktors 4, ergibt sich eine Vereinfachung der Schleusen in der Zuleitung 1, und gleichzeitig eine Erhöhung des Heizwertes des Brenngases. Durch eine wärmetechnische Verkettung der einzelnen Trocknungsstufen läßt sich der Dampfbedarf zur Beheizung der einzelnen Trocknungsstufen bedeutend reduzieren.

Fig.1

## Verfahren und Einrichtung zur thermischen Herstellung von Chemierohstoffen

Die Erfindung betrifft ein Verfahren zur thermischen Herstellung von Chemierohstoffen, wie insbesondere eines Brenngases mit niedrigem Ballastgehalt aus minderwertign nassen Brennstoffen, wie Braunkohle, Torf, Klärschlamm und Biomassen, bei dem der Brennstoff nach einer Trocknung bei überatmosphärischem Druck, vorzugsweise 25 bis 40 bar, in einem Reaktor nach Art der Wassergasherstellung behandelt wird, und eine Einrichtung zur Durchführung des Verfahrens.

Es ist bekannt, Brennstoffe in Reaktoren mit höherem als atmosphärischem Druck zu vergasen, wobei der Brennstoff stufenweise unter höheren Druck versetzt wird, und wobei zwischen den Stufen Druckschleusen vorgesehen sind, und daß zur Inertisierung dieser Druckerhöhungseinrichtung spezielle Inertisierungsgase, wie z.B. Stickstoff, CO₂ oder auch Rauchgase, in das Verfahren eingebracht werden. Der Nachteil liegt im wesentlichem im Problem der Dichtung des Systems sowie in der Qualität des erzeugten Brenngases, das durch die Luftzuführung im Vergaser doch relativ viel Stickstoff enthält. Es ist daher ein Ziel der Erfindung, den Nachteilèn zu begegnen, d.h. den operativen Aufwand zu senken und gleichzeitg die Qualität der Brenngase durch Reduktion an Nichtbrennbarem zu erhöhen.

Das vorliegende Verfahren ist dadurch gekennzeichnet, daß die Trocknung des Brennstoffes in mindestens zwei Fluidisierungsstufen, insbesondere bei steigenden Temperatur- und/oder Druckstufen, durchgeführt wird, wobei in der Endstufe, insbesondere bei der abschließenden Behandlung in einem Reaktor in der Endstufe des Trockners, der Behandlungsdruck höher als in der vorgeschalteten Stufe und insbesondere dem nachgeschalteten Reaktor ist.

Durch die Anordnung der Trocknung bzw. des Vortrockners außerhalb des Reaktors, in dem die Vergasung bzw. Verkohlung stattfindet, wird der Brennstoff im größeren Maße als bis jetzt zur Erzeugung eines Brenngases und weniger zur Erzeugung der Trocknungsenergie herangezogen, wodurch die Qualität des Brenngases, abgesehen von der Einbindung der Brüden, im Heizwert verbessert wird. Durch die besondere Druckwahl bestimmt die Inertisierung der Endstufe der Trocknung die Inertisierung der Zuführung des Brennstoffes, ohne daß eigene Inertisierungseinrichtungen benötigt werden.

Gemäß einem weiteren Erfindungsmerkmal ist die Endstufe des Trockners als Fließbetttrockner ausgebildet, in der das Fluidisierungsmedium zumindest teilweise im Kreislauf geführter Sattdampf ist, dessen zuwachsender Dampfüberschuß im Vortrockner kondensiert wird und in der Endstufe der Dampfdruck durch Regelung der Dampfabgabe an den Vortrockner auf dem gegenüber dem Reaktor erhöhten Druck gehalten ist. Dieses Merkmal ermöglicht eine Vereinfachung der Schleusen zwischen den einzelnen Druckstufen, indem die Dampfdichtheit sowohl in Richtung zum Vortrockner als auch in Richtung zum Reaktor mit größeren Toleranzen ausgestattet werden kann, weil der Dampfdruck sich durch die ständige Verdampfung der Feuchtigkeit naturgemäß erhöht und ein Entweichen in Richtung zum Reaktor bzw. Vortrockner die Funktion der Einrichtung nicht in Frage stellt. Durch die Regelung der Dampfabgabe an den Vortrockner wird darüber hinaus ein Teil der Awärme der Endstufe im Vortrockner verwertet, wodurch zusätzlich die wärmebilanz verbessert wird. Dem gleichen Zweck dient das Merkmal des Anspruches 3, indem das in der Endstufe anfallende Kondensat im Vortrockner weiter abgekühlt und entspannt wird.

Gemäß einem weiteren erfindungsgemäßen Verfahrensschritt wird nach einer Vorbereitung des Brennstoffes, insbesondere der Biomasse, zur Erzielung eines fluidisierbaren Zustandes, derselbe in mindestens zwei thermischen Stufen durch Wärmezufuhr zuerst bei etwa 100° C vorgetrocknet und der vorgetrocknete Brennstoff durch weitere Wärmezufuhr auf ca. 280° C einer weiteren Trocknung und endothermen Verkohlungsreaktion bei Temperaturanstieg auf etwa 380° C unterzogen wird, wobei die in den einzelnen Stufen anfallenden dampf- oder gasförmigen Produkte zur Fluidisierung des Brennstoffes herangezogen und der anfallende Überschuß stufenweise getrennt kondensiert wird.

Die erfindungsgemäße Einrichtung zur Durchführung des Verfahrens ist dadurch gekennzeichnet, daß durch die gutseitige Hintereinanderschaltung zweier mit unterschiedlichen Temperaturen arbeitender Fluidisierungsstufen als Trockner und Entgaser, wobei jede Fluidisierungsstufe an je einem eigenen Kreislauf des Fluidisierungsmediums angeschlossen ist, das Überschußgas zumindest teilweise als Kondensat abgeführt und selbst durch kondensierenden Dampf bei konstanter Temperatur beheizt wird. Weitere wesentliche Merkmale der Erfindung sind in den Unteransprüchen 8 und 9 angegeben.

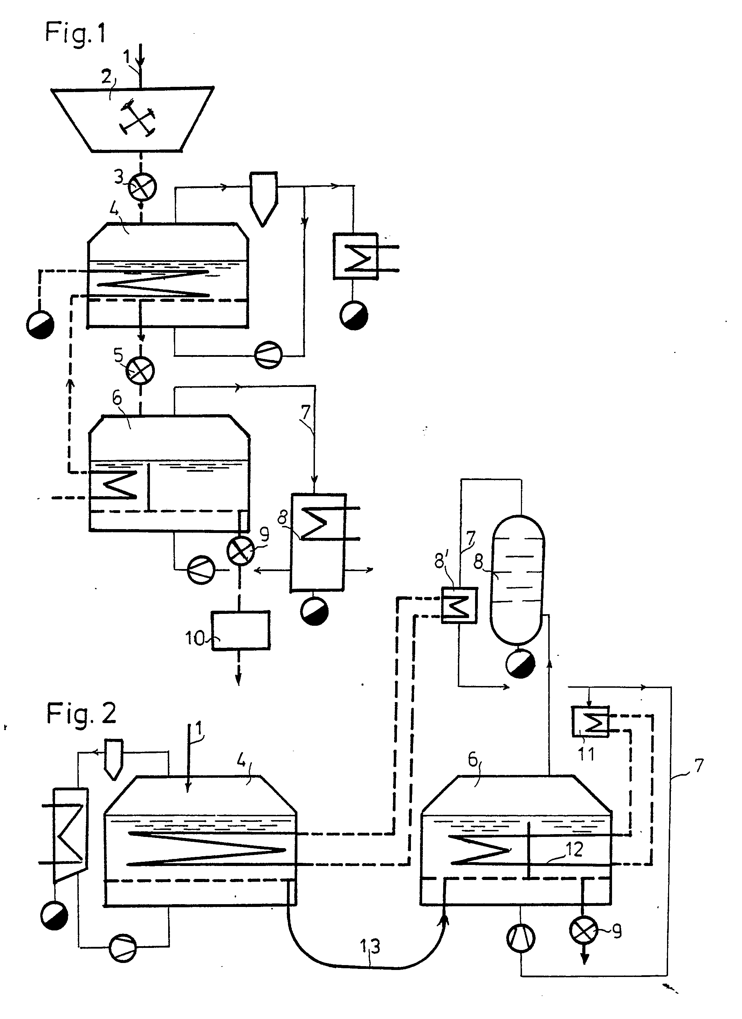

In den angeschlossenen Fig. 1 bis 3 ist die Erfindung beispielsweise und schematisch in Form von drei Schaltbildern dargestellt, und wird anhand dieser beschrieben.

Die Biomasse (Holz, Stroh, Torf und gegebenenfalls Klärschlamm, aber auch bergfeuchter Braunkohle, wird über die Leitung 1 in das Verfahren eingebracht und zuerst in einer Verarbeitungsanlage 2 in fließfähigen Zustand gebracht, woei größere Stücke zerkleinert bzw. Schlämme von der überschüssigen Flüssigkeit (Wasser), beispielsweise in Zentrifugen, befreit werden. Die fluidisierbare Masse wird nun über die Schleuse 3 einem Trockner 4 zugeführt, der mit kondensierendem Dampf von etwa l50° C beheizt wird. Der Brennstoff wird hiebei getrocknet und auf etwa 110° C erhitzt. Der erhitzte Brennstoff wird abgezogen und über eine Schleuse 5 dem eigentlichen Entgaser 6 zugeführt und weiter auf etwa 280° C erhitzt. Bei dieser Temperatur beginnt eine exotherme Reaktion, bei der Biomasse ohne äußere Wärmezufuhr auf 380° C erhitzt wird, wobei Destillationsgase abgegeben werden, die in einem Kreislauf geführt werden, so daß der ganze Prozeß unter der Destillationsgasatmosphäre, also im wesentlichen inert, läuft. Das jeweils zuwachsende Destillationsgas wird in einem Kondensator 8 niedergeschlagen, wobei im wesentlichen Essigsäure, Ameisensäure, Methanol und auch Teere anfallen. Diese organischen Verbindungen werden im flüssigen Zustand einer Weiterverwertung zugeführt. Das nicht kondensierbare, überschüssige Gas, hauptsächlich Methan, wird ebenfalls ausgeschleust. Die im Entgaser 6 entstehende Holzkohle wird über die Schleuse 9 entnommen und nach einer Kühlung 10 einer weiteren Verwertung zugeführt.

Beispiel:

Wird als Brennstoff lufttrockenes Holz als Biomasse etwa in der Größenordnung von 1 Tonne/Stunde verwendet, so läßt sich aus dieser Biomasse bei etwa 110° C 250 kg Wasser entziehen. Im Entgaser werden 130 kg Gas mit einem unteren Heizwert von 1500 kcal frei, und als kondensierbare Flüssigkeiten (Essigsäure, Ameisensäure, Methanol, Teer) etwa 320 kg. Als fester Rückstand fällt etwa 300 kg Holzkohle mit einem Heizwert von 6500 kcal an.

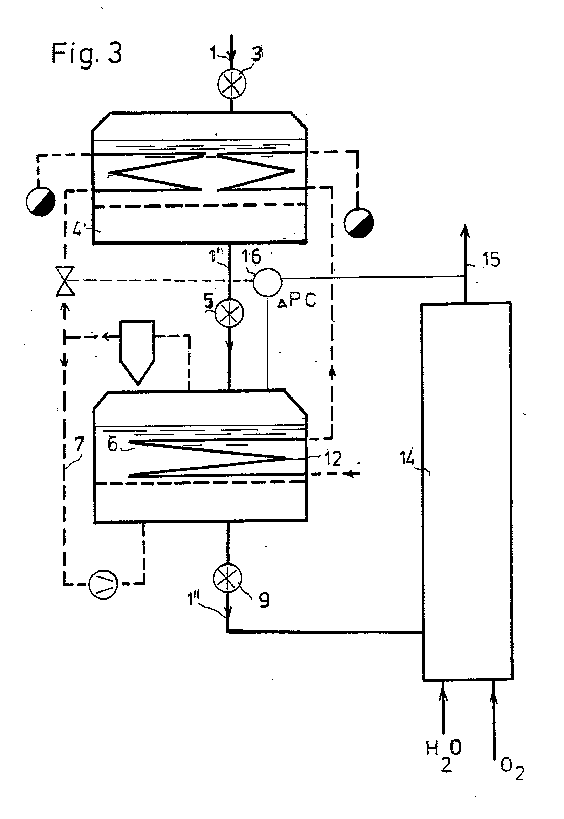

In Fig. 2 ist die Verbindung des Trockners 4 mit dem Entgaser 6 bzw. die Beheizung der beiden Apparate energiesparend im Detail darstellt. Das im Entgaser 6 erzeugte Brenngas wird in einem Dampferzeuger 11 verfeuert, dessen erzeugter Dampf zur Beheizung des Entgasers 6 in den Heizflächen 12 herangezogen wird. Das im Kreislauf 7 geführte Gas wird über einen Kondensator 8, 8′, geführt, in welchem das Kondensat gewonnen und gleichzeitig das Medium für die Beheizung des Trockners erhitzt bzw. verdampft wird, so daß der Trockner 4 praktisch über die Abwärme des Entgasers 6 beheizt wird. Auf der Festkörperseite ist der Trockner 4 mit dem Entgaser 6 durch einen Syphon 13 verbunden, in welchem die fluidisierte Biomasse aus dem Trockner 4 in den Entgaser 6 im fluidisierten Zustand übergeführt wird. Die bei der Kondensation der Brüden im Trockner 4 anfallende Abwärme kann beispielsweise zur Vorwärmung der Verbrennungsluft im Kessel 11 Verwendung finden oder auch zur Erzeugung von Warmwasser dienen. Anstelle des Kühlers 10 (Fig.1) kann beispielsweise eine nicht dargestellte Brikettierungsanlage oder ein 14 (Fig.3) vorgesehen werden, in der der zum Teil plastifizierte Koks unter Beigabe von vorgetrockneter Biomasse etwa im Verhältnis 4:1 gepreßt wird.

Durch die geschlossene Kreislaufführung der Trocknungs- und Entgasungsgase wird die Energiebilanz verbessert, wobei insbesondere die entstehende Abwärme zweckmäßig eingebunden wird. Durch die getrennte Kreislaufführung läßt sich der im Brüden an sich wertlose Dampf kondensieren und problemlos aus dem weiteren Verfahren ausscheiden, wodurch Transportmengen/Wärmeeinheit sich bedeutend reduzieren lassen und die entstehenden Brennstoffe einen bedeutend höheren Heizwert aufweisen bzw. die entstehenden Chemierohstoffe einen höheren Verkaufswert aufweisen. Da das Verfahren praktisch emissionsfrei arbeitet, ist auch der Aufstellungsort problemlos.

Gemäß Fig. 3 wird über die Zuführung 1, in der eine Schleuse 3 vorgesehen ist, ein Brennstoff in einen Vortrockner 4 eingebracht, der gegenüber der Atmosphäre einen erhöhten Arbeitsdruck aufweist. Der vorgetrocknete Brennstoff wird über die Leitung 1′ und einer weiteren Schleuse 5 einem zweiten Trockner 6 zugeführt, in welchem die Trocknung durch im Trockner angeordnete Heizflächen 12 und ein im Kreislauf 7 umgewälztes Medium, insbesondere Sattdampf, gegeben ist. Der bei der Trocknung entstehende Sattdampf vermehrt das im Kreislauf geführte Trocknungsmedium, kann also zur Druckerhöhung des Trockners verwendet werden, und kann darüber hinaus noch zur Beheizung, zumindest zur teilweisen Beheizung, des Vortrockners verwendet werden, indem dort der Zuwachs kondensiert wird. Wenn nun das unter Druck stehende dampfförmige Medium teilweise in Richtung zum Vortrockner bzw. in Richtung Reaktor 14 über Undichtheiten in den Schleusen 5 bzw. 9 eventuell mit dem zufließenden oder abfließenden Brennstoff, erfolgt, so ist durch diese Verfahrensweise keine Gefährdung des Betriebes gegeben, wodurch Inertgassperren überflüssig werden. Diese Vorteile schlagen natürlich mit steigendem Trocknungsdruck erhöht durch und sind bei einem Trocknungsdruck von 25 bis 40 bar beachtlich. Vom Trockner wird der getrocknete Brennstoff über die Leitung 1″ und die Schleuse 9 in den Reaktor 14 übergeführt, in welchem die Brennstoffe, insbesondere durch Zugabe von Sauerstoff und/oder Wasserdampf bei etwas niedrigerem Druck als in der Endstufe 6 der Trocknerkette in ein Brenngas umgewandelt. Dieses Brenngas wird über die Leitung 15 abgeführt und direkt einer Verbrennung, insbesondere einem Gasturbinenprozeß, zugeführt. Durch die Heizflächen 12 der Endstufe 6 des Trockners wird ein kondensierender Dampf geführt, dessen entstehendes Kondensat unter Umständen in einem Vortrockner 4 zur teilweisen Beheizung desselben unterkühlt und entspannt wird, so daß in der weiteren Behandlung des Reinkondensates keine Dampfbildung auftritt. Zur Regelung des Prozesses ist ein Druckregler 16 vorgesehen, der in Abhängigkeit des Druckes des Brenngases in der Leitung 15 und des Innendruckes in der Endstufe 6 des Trockners den zur Beheizung des Vortrockners abgezweigten Dampfes mengenmäßig so regelt, daß in der Endstufe 6 gegenüber dem Reaktor 14 ein geringer Überdruck herrscht, so daß der Dampfdruck der Endstufe 6 sowohl in Richtung zum Reaktor 14 als auch in Richtung zum Vortrockner 4 wirkt. Durch diese Maßnahme wird der Falschlufteinsaugung entgegengewirkt und damit die Betriebssicherheit der Anlage gegenüber Explosionen erhöht. Durch die Erhöhung der Trocknungstemperatur vor dem Eintritt in den Reaktor 14, wobei eventuell eine Vorentgasung des Brennstoffes bereits in der Endstufe 6 vorgesehen ist, ergibt sich ein höherer Wärmeeintrag in den Reaktor 14, so daß im Reaktor 14 weniger Brennstoff verbrannt bzw. zur Verbrennung des Brennstoffes weniger Luft notwendig ist, und der Stickstoffgehalt des Brenngases reduziert wird. Gleichzeitig wird durch die Vorentgasung des Brennstoffes in der Endstufe 6 ein Großteil der unbrennbaren Ballaststoffe wie $CO_2$ die zuerst bei der Vergasung frei werden, vom Reaktor ferngehalten, wodurch noch eine weitere Entlastung des Brenngases in der Leitung 15 gegeben ist. Besonders wirtschaftlich ist somit die Trennung Trocknung (Abscheidung von Oberflächenwasser), Vorentgasung oder Verkohlung (Abtrennung von $N_2$, $CO_2$ und gegebenenfalls leicht flüchtiger organischer Wertsubstanzen, wie Ameisensäure, Essigsäure) und der Verkokung bzw. Vergasung (Herstellung und Trennung von Kohlenwasserstoffen und festen Rückständen).

**Ansprüche**

1) Verfahren zur thermischen Herstellung von Chemierohstoffen, wie insbesondere eines Brenngases mit niedrigem Ballastgehalt aus minderwertigen nassen Brennstoffen, wie Braunkohle, Torf, Klärschlamm und Biomassen, bei dem der Brennstoff nach einer Trocknung bei überatmosphärischem Druck, vorzugsweise 25 bis 40 bar, in einem Reaktor nach Art der Wassergasherstellung behandelt wird, dadurch gekennzeichnet, daß die Trocknung des Brennstoffes in mindestens zwei Fluidisierungsstufen, insbesondere bei steigenden Temperatur- und/oder Druckstufen durchgeführt wird, wobei in der Endstufe, insbesondere bei der abschließenden Behandlung in einem Reaktor in der Endstufe des Trockners, der Behandlungsdruck höher als in der vorgeschalteten Stufe und insbesondere dem nachgeschalteten Reaktor ist.

2) Verfahren nach Anspruch 1, dadurch gekennzeichnet, daß die Endstufe des Trockners als Fließbetttrockner ausgebildet ist, in der das Fluidisierungsmedium zumindest teilweise im Kreislauf geführter Sattdampf ist, dessen zuwachsender Dampfüberschuß im Vortrockner kondensiert wird und daß in der Endstufe der Dampfdruck durch Regelung der Dampfabgabe an den Vortrockner auf dem gegenüber dem Reaktor erhöhten Druck gehalten ist.

3) Verfahren nach Anspruch 2, dadurch gekennzeichnet, daß im Vortrockner das in der Endstufe bei der Beheizung anfallende Kondensat entspannt und das verdampfte Kondensat wieder kondensiert und damit abgekühlt und entspannt wird.

4) Verfahren nach Anspruch 1, dadurch gekennzeichnet, daß nach einer Vorbereitung des Brennstoffes, insbesondere der Biomasse, zur Erzielung eines fluidisierbaren Zustandes derselbe in mindestens zwei thermischen Stufen durch Wärmezufuhr zuerst bei etwa 100° C vorgetrocknet und der vorgetrocknete Brennstoff durch weitere Wärmezufuhr auf ca. 280° C einer weiteren Trocknung und endothermen Verkohlungsreaktion bei Temperaturanstieg auf etwa 380° C unterzogen wird, wobei die in den einzelnen Stufen anfallenden dampf- oder gasförmigen Produkte zur Fluidisierung des Brennstoffes herangezogen und der anfallende Überschuß stufenweise getrennt kondensiert wird.

5) Verfahren nach Anspruch 4, dadurch gekennzeichnet, daß die beiden thermischen Stufen mit der Wärmezufuhr auf der Beheizungsseite und insbesondere die Kondensatoren kühlungsseitig wärmetechnisch verbunden sind.

6) Verfahren nach Anspruch 4, dadurch gekennzeichnet, daß zur Vorbereitung des Brennstoffes derselbe durch Wasserentzug, insbesondere deren Eindickung, oder durch Zerkleinerung in fluidiserbaren Zustand gebracht wird.

7) Einrichtung zur Durchführung des Verfahrens nach mindestens einem der Ansprüche 1 bis 6, dadurch gekennzeichnet, daß durch die gutseitige Hintereinanderschaltung zweier mit unterschiedlichen Temperaturen arbeitender Fluidisierungsstufen als Trockner (4) und Entgaser (6), wobei jede Fluidisierungsstufe an je einem eigenen Kreislauf des Fluidisierungsmediums angeschlossen ist, das Überschußgas zumindest teilweise als Kondensat abgeführt und selbst durch kondensierenden Dampf bei konstanter Temperatur beheizt wird.

8) Einrichtung nach Anspruch 7, dadurch gekennzeichnet, daß die beiden Fluidisierungsstufen (4,6) durch einen Syphon (13) feststoffseitig verbunden sind.

9) Einrichtung nach Anspruch 7, dadurch gekennzeichnet, daß in der Zuführung (1, 1', 1") des zu vergasenden Brennstoffes in den Reaktor eine Kette von mindestens zwei Fluidisierungsstufen (4,6) vorgesehen ist, in welchen der Trocknungsdruck stufenweise erhöht ist und die Inertisierung der Schleuse (5) durch das Trocknungsmedium der Endstufe (6) gegeben ist.

Fig.1

Fig. 2

Fig. 3

EP 0 324 957 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 434 619 (VEB SCHWERMASCHINENBAU "KARL LIEBKNECHT") * Seite 9, Zeile 17 - Seite 10, Zeile 34; Seiten 1-3 * | 1 | C 10 J 3/54 C 10 J 3/56 |
| A | --- | 2,4 | |
| Y | EP-A-0 030 841 (EXXON) * Seite 7, Zeilen 2-23 * --- | 1 | |
| A | US-A-4 497 637 (PURDY) * Spalte 4, Zeile 20 - Spalte 5, Zeile 14 * --- | 1 | |
| A | US-A-4 432 290 (ISHII) ----- | | |

RECHERCHIERTE SACHGEBIETE (Int. Cl.4)

C 10 J
C 10 B

Der vorliegende Recherchenbericht wurde für alle Patentansprüche erstellt

| Recherchenort | Abschlußdatum der Recherche | Prüfer |
|---|---|---|
| DEN HAAG | 24-04-1989 | WENDLING J.P. |